# EUROPEAN PATENT SPECIFICATION

(11) **EP 4 489 159 B1**
(45) Date of publication and mention of the grant of the patent: **24.12.2025**
(21) Application number: 24178755.5
(22) Date of filing: 29.05.2024
(51) Int. Cl.: H01M 10/04, H01M 50/463, H01M 10/0525, H01M 10/0587, H01M 10/0585, H01M 10/0566

(54) **SECONDARY BATTERY**
SEKUNDÄRBATTERIE
BATTERIE SECONDAIRE

(30) Priority: 07.07.2023 JP 2023112382
(43) Date of publication of application: 08.01.2025
(73) Proprietor: Prime Planet Energy & Solutions, Inc., Tokyo 103-0022 (JP)
(72) Inventor: MINAMI, Emi, Tokyo, 103-0022 (JP)
(74) Representative: Kuhnen & Wacker Patent- und Rechtsanwaltsbüro PartG mbB

(56) References cited:
- JP-A- 2005 228 642
- JP-A- 2016 015 243

## Description

### CROSS REFERENCE TO RELATED APPLICATIONS

This nonprovisional application is based on Japanese Patent Application No. 2023-112382 filed on July 7, 2023 with the Japan Patent Office.

### BACKGROUND OF THE INVENTION

### Field of the Invention

The present technology relates to a secondary battery.

### Description of the Background Art

Japanese Patent Laying-Open No. 2014-203668 is a prior art document that discloses a configuration of a non-aqueous electrolyte secondary battery. The non-aqueous electrolyte secondary battery described in Japanese Patent Laying-Open No. 2014-203668 includes a negative electrode current collector, a negative-electrode-active-material composite material portion, and a separator. The negative electrode current collector is a metal film. The negative-electrode-active-material composite material portion is formed as a plurality of negative-electrode-active-material composite material portions, which project from the negative electrode current collector toward the separator.

Japanese Patent Laying-Open No. 2012-243567 is a prior art document that discloses a configuration of a lithium ion battery. The lithium ion battery described in Japanese Patent Laying-Open No. 2012-243567 includes a wound electrode group. The wound electrode group is wound with a separator interposed between a positive electrode and a negative electrode. The positive electrode and the negative electrode have respective depressed and projecting surfaces that engage with each other with the separator interposed therebetween. JP 2005 228642 A describes a secondary battery having grooves in the electrode material for improving permeation.

### SUMMARY OF THE INVENTION

In each of the secondary batteries described in Japanese Patent Laying-Open No. 2014-203668 and Japanese Patent Laying-Open No. 2012-243567, space for permeation of the electrolyte solution between the separator and the positive electrode plate or the negative electrode plate can fail to be allocated, due to expansion of the negative electrode active material for example, while the strength of the separator in the electrode assembly is ensured. Thus, it is difficult to achieve permeation of the electrolyte solution into the electrode assembly, which has been discharged out of the electrode assembly at the time of charging for example, while ensuring the strength of the separator.

The present technology has been devised to solve the above-described problem and is aimed at providing a secondary battery that enables achieving permeation of the electrolyte solution into the electrode assembly while ensuring the strength of the separator.

The present technology provides the following secondary battery.
[1] A secondary battery comprising:
   an electrode assembly including a positive electrode plate, a separator, and a negative electrode plate and having a flat shape, the separator being situated between the positive electrode plate and the negative electrode plate; and
   a case accommodating the electrode assembly and an electrolyte solution, wherein
   in a view in a thickness direction of the electrode assembly, the separator includes first regions and a second region, the first regions including a first end portion and a second end portion opposite to each other in a first direction orthogonal to the thickness direction, the second region being sandwiched between the first regions in the first direction and including a central portion of the separator,
   a depressed portion is provided in a surface of the separator, the depressed portion being situated at least in the first region and allowing the electrolyte solution to flow into the depressed portion, and
   in a view in the first direction, a cross sectional area of the depressed portion in the first region of the separator is larger than a cross sectional area of the depressed portion in the second region of the separator.
[2] The secondary battery according to [1], wherein in the view in the thickness direction, an occupancy area of the depressed portion in the first region of the separator is larger than an occupancy area of the depressed portion in the second region of the separator.
[3] The secondary battery according to [1] or [2], wherein in the view in the thickness direction, the electrode assembly has a rectangular shape including a long side direction and a short side direction, and the first direction is the long side direction of the electrode assembly.
[4] The secondary battery according to any one of [1] to [3], wherein the depressed portion includes a groove portion extending along the first direction from the first end portion to the second end portion of the separator.
[5] The secondary battery according to [4], wherein an average depth of the depressed portion in the first region of the separator is larger than an average depth of the depressed portion in the second region of the separator.
[6] The secondary battery according to any one of [1] to [3], wherein the depressed portion includes a plurality of holes situated side by side in the first direction.
[7] The secondary battery according to any one of [1] to [6], wherein the electrode assembly is a wound type electrode assembly in which the positive electrode plate, the separator, and the negative electrode plate are wound about an axis along the first direction.

The foregoing and other objects, features, aspects, and advantages of the present invention will become apparent from the following detailed description on the present invention, which will be understood in conjunction with the accompanying drawings.

### BRIEF DESCRIPTION OF THE DRAWINGS

Fig. 1 is a perspective view illustrating a configuration of a secondary battery according to Embodiment 1 of the present technology.
Fig. 2 is a perspective view illustrating a configuration of an electrode assembly according to Embodiment 1 of the present technology.
Fig. 3 is a schematic view illustrating flow of an electrolyte solution in the secondary battery according to Embodiment 1 of the present technology.
Fig. 4 is a plan view illustrating a configuration of a separator included in the electrode assembly of the secondary battery according to Embodiment 1 of the present technology.
Fig. 5 is a partial cross sectional view of the secondary battery in Fig. 4, which is viewed in the direction of a line with arrows V-V.
Fig. 6 is a partial cross sectional view of the secondary battery in Fig. 4, which is viewed in the direction of a line with arrows VI-VI.
Fig. 7 is a partial cross sectional view illustrating a configuration of a separator included in the electrode assembly of the secondary battery according to Variation 1 of Embodiment 1 of the present technology.
Fig. 8 is a partial cross sectional view illustrating a configuration of a separator included in the electrode assembly of the secondary battery according to Variation 2 of Embodiment 1 of the present technology.
Fig. 9 is a graph illustrating respective electric discharge characteristics of the secondary batteries according to Embodiment 1 of the present technology and a comparative example, which are each based on the relation between the discharge time and voltage of the secondary battery.
Fig. 10 is a graph illustrating the relation between the number of charging and discharging cycles and the degree of battery capacity decline of each of the secondary batteries according to Embodiment 1 of the present technology and the comparative example.
Fig. 11 is a plan view illustrating a configuration of a separator included in an electrode assembly of a secondary battery according to Embodiment 2 of the present technology.
Fig. 12 is a plan view illustrating a configuration of a separator included in an electrode assembly of a secondary battery according to Embodiment 3 of the present technology.

### DESCRIPTION OF THE PREFERRED EMBODIMENTS

Embodiments of the present technology are described below. The same or corresponding portions are denoted by the same reference characters, and may not be described repeatedly.

In the embodiments described below, when reference is made to a number, an amount, and the like, the scope of the present technology is not necessarily limited to the number, the amount, and the like unless otherwise stated particularly. Further, in the embodiments described below, each component is not necessarily essential to the present technology unless otherwise stated particularly. Further, the present technology is not necessarily limited to what exhibits all the functions and effects mentioned in the present embodiments.

Herein, the terms "comprise", "include", and "have" are open-end terms. That is, when a certain feature is included, a feature other than the foregoing feature may be or may not be included.

Also, herein, when geometric terms and terms representing positional/directional relations are used, for example, when terms such as "parallel", "orthogonal", "obliquely at 45°", "coaxial", and "along" are used, these terms tolerate manufacturing errors or slight fluctuations. Herein, when terms representing relative positional relations such as "upper side" and "lower side" are used, these terms are each used to indicate a relative positional relation in one state, and the relative positional relation may be reversed or turned at a given angle in accordance with an installation direction of each mechanism (by reversing the entire mechanism upside down, for example).

Herein, the term "battery" is not limited to a lithium ion battery but may include other batteries such as a nickel-metal hydride battery and a sodium ion battery.
Herein, the term "electrode" may collectively represent a positive electrode and a negative electrode.

Further, a "battery module" including the secondary battery according to the present specification can be mounted on vehicles such as a hybrid electric vehicle (HEV), a plug-in hybrid electric vehicle (PHEV), and a battery electric vehicle (BEV). The application of the "battery module" including the secondary battery according to the present specification is not limited to the use in a vehicle.

In the drawings, an X direction as a first direction is defined as a direction in which a first end portion and a second end portion of the separator in the electrode assembly are opposite to each other, a Y direction is defined as a thickness direction of the electrode assembly having a flat shape, and a Z direction is defined as a direction orthogonal to the first direction and the thickness direction of the electrode assembly. To facilitate understanding of the present technology, the dimensional ratio of each feature in the drawings may be changed from the actual dimensional ratio thereof.

### (Embodiment 1)

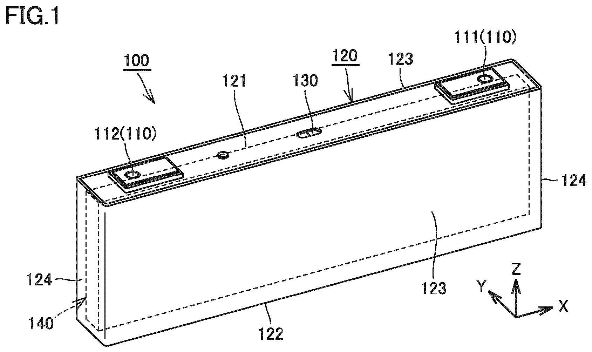

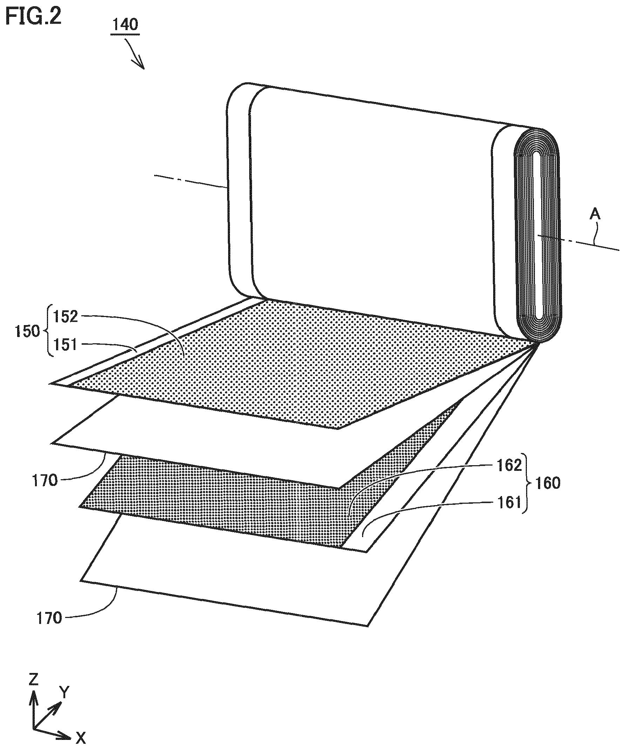

Fig. 1 is a perspective view illustrating a configuration of a secondary battery 100 according to Embodiment 1 of the present technology. Fig. 2 is a perspective view illustrating a configuration of an electrode assembly 140 according to Embodiment 1 of the present technology.

Secondary battery 100 according to the present embodiment is a non-aqueous lithium ion battery for example. The electric capacity of secondary battery 100 is 20 Ah or more and 220 Ah or less for example. As illustrated in Figs. 1 and 2, secondary battery 100 includes an electrode terminal 110, a case 120, a gas-discharge valve 130, and electrode assembly 140.

Electrode terminal 110 includes a positive electrode terminal 111 and a negative electrode terminal 112. Electrode terminal 110 is provided on case 120.

Case 120 is a container that accommodates electrode assembly 140 and an electrolyte solution. Case 120 has an approximately rectangular parallelepiped shape. Case 120 is formed of aluminum, an aluminum alloy, iron, or an iron alloy such as stainless steel.

The length of case 120 in the X direction is, for example, 30 mm or more and 300 mm or less. The height of case 120 in the Z direction is, for example, 30 mm or more and 100 mm or less. Case 120 in the X direction is, for example, one or more times and five or less times as long as the height of case 120 in the Z direction. In the present embodiment, case 120 in the X direction is, for example, three times as long as the height of case 120 in the Z direction.

As illustrated in Fig. 1, case 120 includes a sealing plate 121, a bottom surface 122, a pair of long side walls 123, and a pair of short side walls 124.

Sealing plate 121 forms the upper surface of case 120. Electrode terminal 110 is disposed on sealing plate 121. Bottom surface 122 is opposite to sealing plate 121 in the Z direction.

The pair of long side walls 123 and the pair of short side walls 124 form the side surface of case 120. The pair of long side walls 123 and the pair of short side walls 124 are orthogonal to each of sealing plate 121 and bottom surface 122. The pair of long side walls 123 are opposite to each other in the Y direction with electrode assembly 140 interposed therebetween. The pair of short side walls 124 are opposite to each other in the X direction with electrode assembly 140 interposed therebetween. Each of the pair of long side walls 123 has a larger area than that of each of the pair of short side walls 124.

Gas-discharge valve 130 is fractured when the pressure inside case 120 becomes equal to or exceeds a predetermined value. Thus, gas in case 120 is discharged out of case 120.

Electrode assembly 140 functions as a power generation element. As illustrated in Fig. 2, electrode assembly 140 includes a positive electrode plate 150, a negative electrode plate 160, and a separator 170.

Electrode assembly 140 according to the present embodiment is a wound type electrode assembly in which positive electrode plate 150, negative electrode plate 160, and separator 170 are wound about a winding axis A along the first direction (the X direction). Separator 170 is situated between positive electrode plate 150 and negative electrode plate 160.

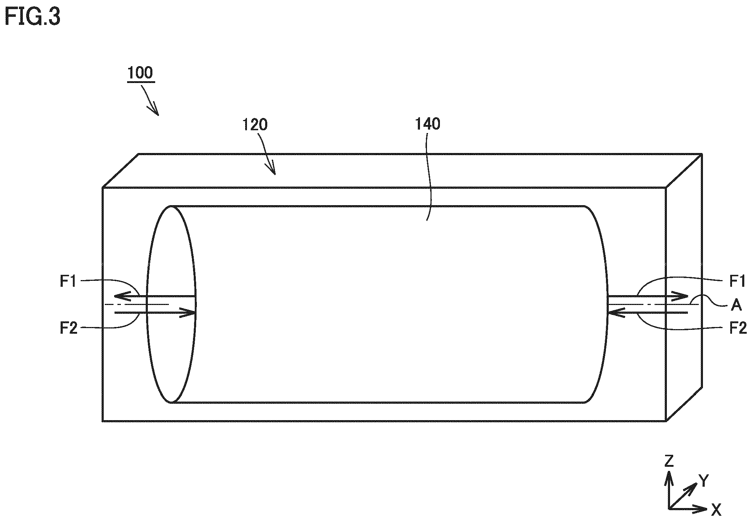

Electrode assembly 140 has a flat shape. For example, electrode assembly 140 is formed so as to have the flat shape by being pressed in the direction orthogonal to winding axis A (in the Y direction in Fig. 3) after positive electrode plate 150, negative electrode plate 160, and separator 170 have been wound.

Electrode assembly 140 may be a stacked type electrode assembly in which positive electrode plate 150, separator 170, and negative electrode plate 160 are alternately stacked. When the electrode assembly is the stacked type electrode assembly, the stacking may be performed by folding a long positive electrode plate, a long separator, and a long negative electrode plate in a zigzag manner.

In a view in the thickness direction (the Y direction), electrode assembly 140 has a rectangular shape including a long side direction and a short side direction. In the present embodiment, in electrode assembly 140, the first direction (the X direction) is the long side direction of electrode assembly 140. Further, in electrode assembly 140, the Z direction is the short side direction of electrode assembly 140.

Positive electrode plate 150 includes a positive electrode core body 151 and a positive electrode active material layer 152. Positive electrode core body 151 is a conductive sheet. Positive electrode core body 151 is, for example, an aluminum alloy foil. Positive electrode active material layer 152 is disposed on a surface of positive electrode core body 151.

Examples of the positive electrode active material include a lithium transition metal composite oxide. The lithium transition metal composite oxide in the present embodiment is, for example, a lithium nickel cobalt manganate.

Negative electrode plate 160 includes a negative electrode core body 161 and a negative electrode active material layer 162. Negative electrode core body 161 is a conductive sheet. Negative electrode core body 161 is, for example, a copper alloy foil. Negative electrode active material layer 162 is disposed on a surface of negative electrode core body 161.

Examples of the negative electrode active material include a carbon material such as synthetic graphite, natural graphite, amorphous coat graphite, or amorphous carbon, a non-carbon material such as SiO, and a mixture of the carbon material and the non-carbon material.

Separator 170 is provided so as to insulate positive electrode plate 150 and negative electrode plate 160 from each other. Separator 170 has a configuration that includes a porous sheet as a base material only or includes a base material and a heat-resistant layer.

The base material has ion permeability and an insulation property, examples of which include a microporous thin film, a woven fabric, or a nonwoven fabric. The base material is preferably made from, for example, olefin-based resin such as polyethylene (PE) or polypropylene (PP), or cellulose. The base material may be formed by, for example, a PE layer only or a stack in which a PE layer is sandwiched between two PP layers.

Electrode assembly 140 described above is accommodated in case 120 and is thereafter subjected to permeation of the electrolyte solution. The electrolyte solution is composed of a non-aqueous electrolyte. The non-aqueous electrolyte contains a non-aqueous solvent and an electrolyte salt dissolved in the non-aqueous solvent. The non-aqueous electrolyte is not limited to a liquid electrolyte (a non-aqueous electrolyte solution) but may be a solid electrolyte employing a gel-like polymer or the like. As the non-aqueous solvent, for example, an ester, an ether, a nitrile such as acetonitrile, an amide such as dimethylformamide, or a mixed solvent of two or more of these can be used.

The number of electrode assemblies 140 accommodated in one secondary battery 100 may be one or be two or more. When the number of electrode assemblies is two or more, the two or more electrode assemblies are desirably disposed so as to be positioned side by side in the thickness direction (the Y direction) of electrode assembly 140.

Fig. 3 is a schematic view illustrating flow of the electrolyte solution in secondary battery 100 according to Embodiment 1 of the present technology.

As illustrated in Fig. 3, the electrolyte solution permeates in electrode assembly 140 accommodated in case 120. In the charging or the like of secondary battery 100, the electrolyte solution is discharged out of electrode assembly 140 from the inside of electrode assembly 140 through expansion of electrode assembly 140 and the electrolyte solution, for example. Since electrode assembly 140 according to the present embodiment is the wound type electrode assembly, the electrolyte solution is discharged out of electrode assembly 140 mainly from both ends of electrode assembly 140 along winding axis A. In Fig. 3, the electrolyte solution is discharged from the inside of electrode assembly 140 in an F1 direction.

In the discharging or the like of secondary battery 100, on the other hand, the electrolyte solution permeates into electrode assembly 140 through contraction of electrode assembly 140 and the electrolyte solution, for example. Similarly to the case of charging secondary battery 100, electrode assembly 140 according to the present embodiment is the wound type electrode assembly. Thus, the electrolyte solution permeates into electrode assembly 140 mainly from both ends of electrode assembly 140 along winding axis A. In Fig. 3, the electrolyte solution permeates into electrode assembly 140 in an F2 direction.

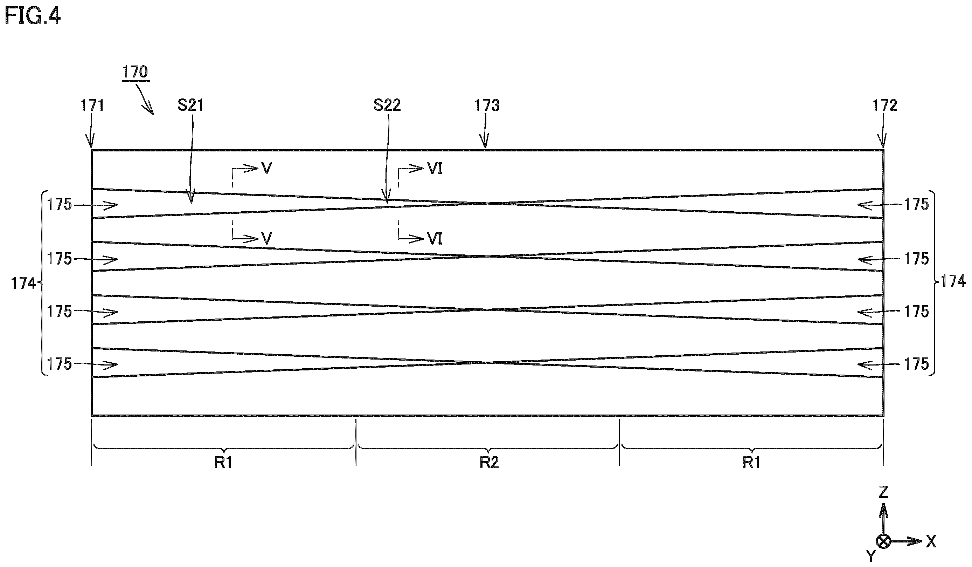

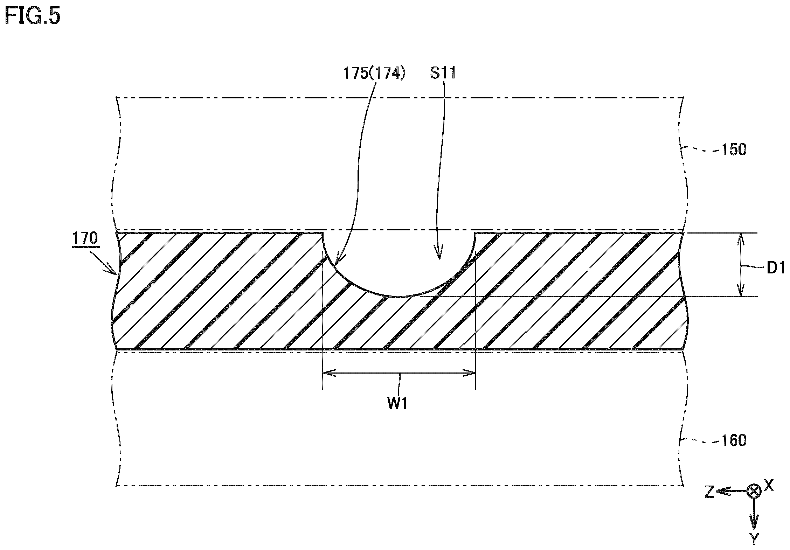

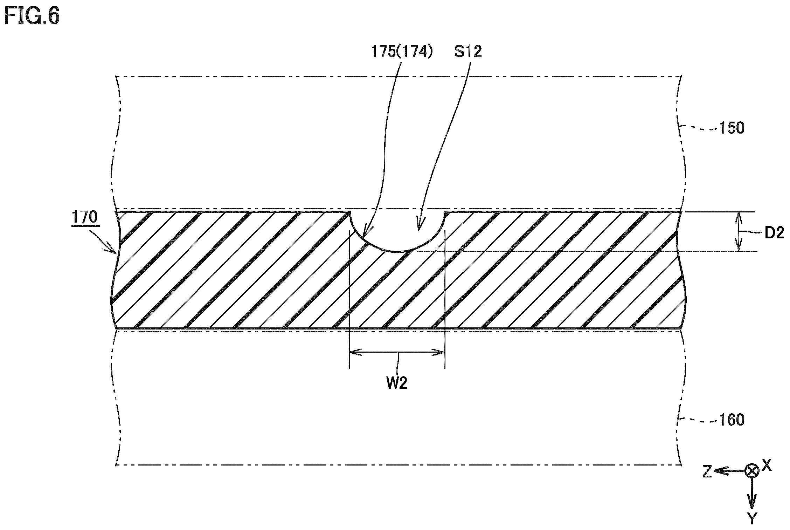

Fig. 4 is a plan view illustrating a configuration of separator 170 included in electrode assembly 140 of secondary battery 100 according to Embodiment 1 of the present technology. Fig. 5 is a partial cross sectional view of secondary battery 100 in Fig. 4, which is viewed in the direction of a line with arrows V-V. Fig. 6 is a partial cross sectional view of secondary battery 100 in Fig. 4, which is viewed in the direction of a line with arrows VI-VI.

As illustrated in Figs. 4 to 6, separator 170 includes first regions R1 and a second region R2.

First regions R1 are situated at both ends in the first direction (the X direction). In a view in the thickness direction of electrode assembly 140 (the Y direction), first regions R1 include a first end portion 171 and a second end portion 172, which are opposite to each other in the first direction (the X direction) orthogonal to the thickness direction (the Y direction). First end portion 171 and second end portion 172 serve as entrances when the electrolyte solution permeates into electrode assembly 140.

First region R1 on one side has a length of 1/4 or more and 1/3 or less of the entire length of separator 170 in the first direction (the X direction). In the present embodiment, the lengths of first regions R1 on the first end portion 171 side and the second end portion 172 side are approximately the same in the first direction (the X direction) but may be different from each other.

In a view in the thickness direction of electrode assembly 140 (the Y direction), second region R2 is sandwiched between first regions R1 in the first direction (the X direction) and includes a central portion 173 of separator 170. Second region R2 has a length of 1/3 or more and 1/2 or less of the entire length of separator 170 in the first direction (the X direction). In the present embodiment, first regions R1 on both sides and second region R2 each have a length obtained through division into substantially equal thirds in the first direction (the X direction).

A depressed portion 174, which allows the electrolyte solution to flow thereinto, is provided in a surface of separator 170. Depressed portion 174 is situated at least in first region R1. By providing depressed portion 174 at least in first region R1, a passage for the electrolyte solution can be reserved in the vicinity of each of first end portion 171 and second end portion 172 that serve as entrances when the electrolyte solution permeates into electrode assembly 140. Accordingly, the electrolyte solution easily permeates into electrode assembly 140. In the present embodiment, depressed portion 174 is provided in each of first regions R1 and second region R2 of separator 170.

Depressed portion 174 according to the present embodiment includes a plurality of groove portions 175. Each of the plurality of groove portions 175 included in depressed portion 174 extends along the first direction (the X direction) from first end portion 171 to second end portion 172 of separator 170. Since the plurality of groove portions 175 are provided across separator 170 between both of its ends, the electrolyte solution flows through depressed portion 174 easily.

As illustrated in Figs. 5 and 6, in a view in the first direction (the X direction), a cross sectional area S11 of depressed portion 174 in first region R1 of separator 170 is larger than a cross sectional area S12 of depressed portion 174 in second region R2 of separator 170. The cross sectional area of depressed portion 174 according to the present embodiment represents the total of the respective cross sectional areas of the plurality of groove portions 175.

The cross sectional area of depressed portion 174 in first region R1 and second region R2 is, for example, in a range of 3% or more and 10% or less of the cross sectional area of separator 170. Thus, the permeation of the electrolyte solution into electrode assembly 140 can be facilitated while ensuring the strength of separator 170.

As illustrated in Figs. 4 to 6, in the present embodiment, in a view in the thickness direction (the Y direction), an occupancy area S21 of depressed portion 174 in first region R1 of separator 170 is larger than an occupancy area S22 of depressed portion 174 in second region R2 of separator 170. In the present embodiment, the occupancy area of depressed portion 174 represents the total of the respective occupancy areas of the plurality of groove portions 175.

The occupancy area of depressed portion 174 varies depending on the respective widths of the plurality of groove portions 175 in the Z direction. A width W1 of each of the plurality of groove portions 175 in first region R1 is, for example, 3% or more and 5% or less of the height of separator 170 in the Z direction. A width W2 of each of the plurality of groove portions 175 in second region R2 is, for example, 0% or more and less than 3% of the height of separator 170 in the Z direction.

In the present embodiment, the width of each of the plurality of groove portions 175 in the Z direction smoothly inclines and decreases from first end portion 171 and second end portion 172 to central portion 173. The plurality of groove portions 175 are just required to be formed so that the occupancy area in first region R1 is larger than the occupancy area in second region R2, and the shape that defines the respective widths of the plurality of groove portions 175 may be a line curving from first end portion 171 and second end portion 172 to central portion 173, such as a wavy shape.

The average depth of depressed portion 174 in first region R1 of separator 170 is larger than the average depth of depressed portion 174 in second region R2 of separator 170. In the present embodiment, a depth D1 of each of the plurality of groove portions 175 in first region R1 is larger than a depth D2 of each of the plurality of groove portions 175 in second region R2.

For example, in first region R1, the depth of depressed portion 174 accounts for 30% or more and 50% or less of the thickness of separator 170. In the present embodiment, in first region R1, the depth D1 of each of the plurality of groove portions 175 accounts for 30% or more and 50% or less of the thickness of separator 170. For example, in second region R2, the depth of depressed portion 174 accounts for 0% or more and less than 30% of the thickness of separator 170. In the present embodiment, in second region R2, the depth D2 of each of the plurality of groove portions 175 accounts for 1% or more and less than 30% of the thickness of separator 170.

In the present embodiment, the depth of each of the plurality of groove portions 175 smoothly inclines and becomes smaller from first end portion 171 and second end portion 172 to central portion 173. The plurality of groove portions 175 are just required to be formed so that the average depth in first region R1 is larger than the average depth in second region R2, and the shape that defines the respective depths of the plurality of groove portions 175 may be a line curving from first end portion 171 and second end portion 172 to central portion 173, such as a wavy shape.

The respective widths or depths of the plurality of groove portions 175 may be different from each other. When the depths of the plurality of groove portions 175 are different, the average depth of depressed portion 174 can be calculated by, for example, taking the average of the respective depths of the plurality of groove portions 175 from the surface of separator 170 in one cross section along the direction orthogonal to the first direction (i.e. the Z direction). Further, although depressed portion 174 is situated on the positive electrode plate 150 side of separator 170 in the present embodiment, depressed portion 174 may be provided on the negative electrode plate 160 side.

Depressed portion 174 is formed by roll pressing for example. Specifically, separator 170 is caused to travel between one roll, which has a shape partially projecting in the circumference direction, and the other roll. The projecting shape of the one roll comes into contact with separator 170 and deforms the surface of separator 170. Accordingly, the projecting shape of the one roll is transferred onto the surface of separator 170 and as a result, depressed portion 174 is formed in separator 170.

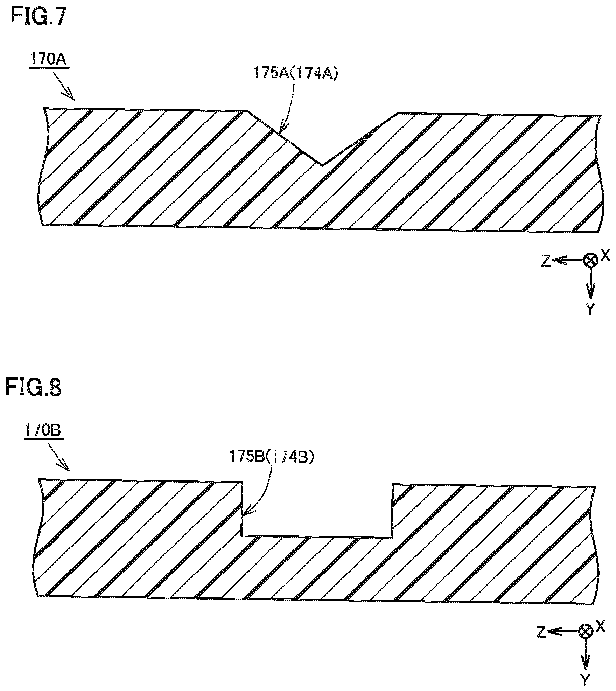

The cross sectional shape of each of the plurality of groove portions 175 in depressed portion 174 is not limited to the shape with a curve. Fig. 7 is a partial cross sectional view illustrating a configuration of a separator 170A included in electrode assembly 140 of secondary battery 100 according to Variation 1 of Embodiment 1 of the present technology. Fig. 8 is a partial cross sectional view illustrating a configuration of a separator 170B included in electrode assembly 140 of secondary battery 100 according to Variation 2 of Embodiment 1 of the present technology.

As illustrated in Fig. 7, electrode assembly 140 according to Variation 1 of the present embodiment includes separator 170A. Separator 170A has a depressed portion 174A including a plurality of groove portions 175A. The shape of each of the plurality of groove portions 175A is a shape with an oblique surface, which is constituted of two planes.

As illustrated in Fig. 8, electrode assembly 140 according to Variation 2 of the present embodiment includes separator 170B. Separator 170B has a depressed portion 174B including a plurality of groove portions 175B. The shape of each of the plurality of groove portions 175B is an angular shape, which is constituted of three planes.

As the cross sectional shape of the depressed portion, various shapes can be employed depending on the strength of the separator, the depth, width, or quantity of the depressed portion relative to the separator, or ease of machining the depressed portion, for example.

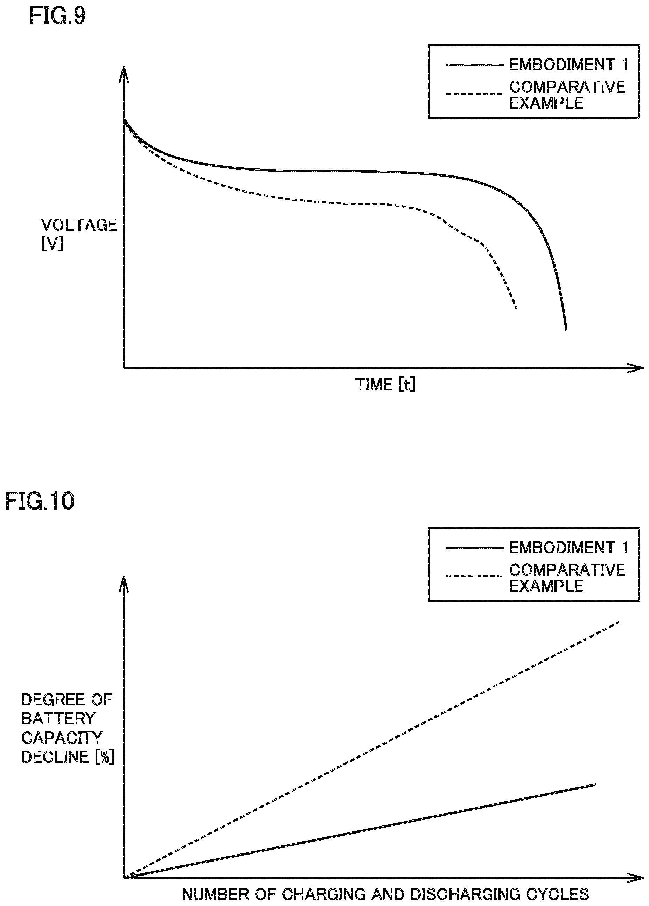

Fig. 9 is a graph illustrating respective electric discharge characteristics of the secondary batteries according to Embodiment 1 of the present technology and a comparative example, which are each based on the relation between the discharge time and voltage of the secondary battery. Fig. 10 is a graph illustrating the relation between the number of charging and discharging cycles and the degree of battery capacity decline of each of the secondary batteries according to Embodiment 1 of the present technology and the comparative example.

The secondary battery according to the comparative example is different from secondary battery 100 according to the present embodiment in that no depressed portion is provided in a surface of the separator. When the secondary battery according to the comparative example is quickly charged, the electrode assembly and the electrolyte solution expand abruptly and accordingly, the electrolyte solution flows out of the electrode assembly easily and unevenness in the concentration of the electrolyte solution is caused easily between the outside and inside of the electrode assembly. Thus, as illustrated in Fig. 9, in the secondary battery according to the comparative example, unevenness in the salinity of the electrolyte solution is caused easily. As a result, increase in electric resistance occurs partially in the electrode assembly and electric discharge characteristics deteriorate easily. Additionally, as illustrated in Fig. 10, in the secondary battery according to the comparative example, the electric capacity declines easily when the charging and discharging are repeated in the electrode assembly.

In contrast, in secondary battery 100 including separator 170 in which depressed portion 174 according to the present embodiment is formed, depressed portion 174 serves as the passage of the electrolyte solution. Accordingly, the electrolyte solution permeates into electrode assembly 140 more easily than in the secondary battery according to the comparative example. Thus, as illustrated in Fig. 9, unevenness in the salinity of the electrolyte solution is hindered from occurring and accordingly, the electric discharge characteristics are enhanced by partially inhibiting increase in the electric resistance, and the like in electrode assembly 140. In secondary battery 100 according to the present embodiment, a desired voltage value can be maintained for a longer time in comparison with the secondary battery according to the comparative example. Further, as illustrated in Fig. 10, unevenness in the salinity of the electrolyte solution is hindered from occurring, and accordingly, decline in the electric capacity is inhibited when the charging and discharging are repeated in electrode assembly 140. In secondary battery 100 according to the present embodiment, even when the charging and discharging cycle is repeated, decline in the electric capacity is slowed in comparison with the secondary battery according to the comparative example.

In secondary battery 100 according to Embodiment 1 of the present technology, the electrolyte solution is enabled to flow into electrode assembly 140 easily via depressed portion 174 by providing depressed portion 174 in first region R1 of separator 170 including first end portion 171 and second end portion 172. By making the cross sectional area of depressed portion 174 relatively large in first region R1 situated on the end portion side of electrode assembly 140 and making the cross sectional area of depressed portion 174 relatively small in second region R2 situated on the central side of electrode assembly 140, inflow of the electrolyte solution can be facilitated on the end portion side of electrode assembly 140 and the strength of separator 170 can be ensured on the central side of electrode assembly 140, where a load tends to be applied when electrode assembly 140 expands. As a result, permeation of the electrolyte solution into electrode assembly 140 can be achieved while ensuring the strength of separator 170.

In secondary battery 100 according to Embodiment 1 of the present technology, by making the occupancy area of depressed portion 174 relatively small on the central side of electrode assembly 140 in a view in the thickness direction (the Y direction), electrode assembly 140 is enabled to expand easily and the strength of separator 170 can be ensured in central portion 173 of electrode assembly 140, where the strength of separator 170 is needed.

In secondary battery 100 according to Embodiment 1 of the present technology, the electrolyte solution can be caused to flow into electrode assembly 140 from depressed portion 174 even when electrode assembly 140 is long in the first direction (the X direction). Accordingly, permeation of the electrolyte solution into electrode assembly 140 can be achieved while ensuring the strength of separator 170.

In secondary battery 100 according to Embodiment 1 of the present technology, the electrolyte solution that enters depressed portion 174 is enabled to flow easily by forming groove portions 175 that each extend from first end portion 171 to second end portion 172 of separator 170.

In secondary battery 100 according to Embodiment 1 of the present technology, the average depth of depressed portion 174 in first region R1 of separator 170 is larger than the average depth of depressed portion 174 in second region R2 of separator 170. Accordingly, the strength of separator 170 can be ensured easily in second region R2 including central portion 173 of electrode assembly 140, where the expansion amount of electrode assembly 140 is large.

In secondary battery 100 according to Embodiment 1 of the present technology, the electrolyte solution is enabled to permeate into the wound type electrode assembly easily by providing depressed portion 174 on both sides of the wound type electrode assembly in the winding axis A direction, where the electrolyte solution mainly flows.

Secondary batteries according to Embodiments 2 and 3 of the present technology are described below. Since the secondary batteries according to these embodiments are each different in the configuration of the depressed portion of the separator from secondary battery 100 according to Embodiment 1 of the present technology, the same features as those of secondary battery 100 according to Embodiment 1 of the present technology are not described repeatedly.

### (Embodiment 2)

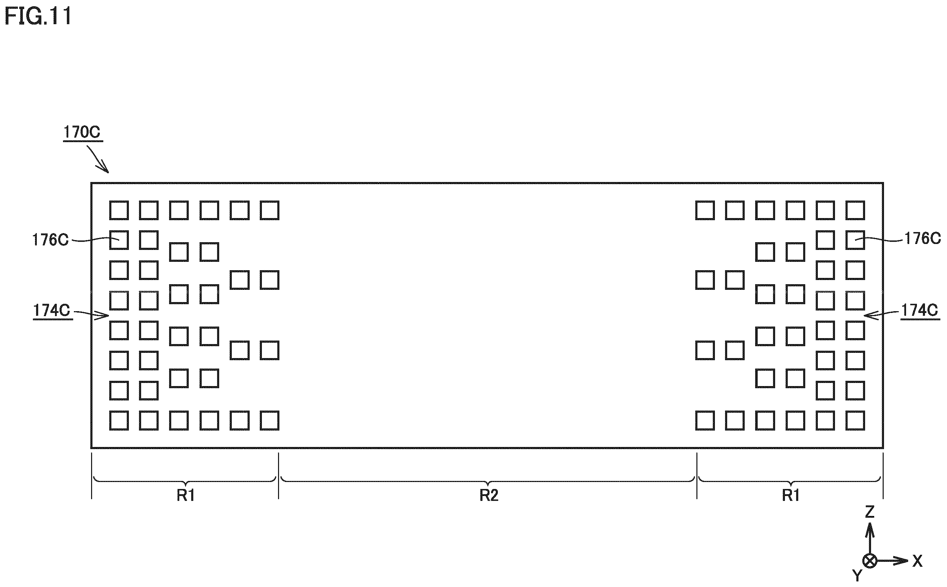

Fig. 11 is a plan view illustrating a configuration of a separator 170C included in an electrode assembly of the secondary battery according to Embodiment 2 of the present technology. As illustrated in Fig. 11, separator 170C according to the present embodiment includes a plurality of holes 176C as a depressed portion 174C. The plurality of holes 176C are situated side by side in the first direction (the X direction) and the Z direction. The plurality of holes 176C each have a rectangular shape in a view in the thickness direction of the electrode assembly (the Y direction).

The plurality of holes 176C are situated in first regions R1. First regions R1 and a second region R2 each occupy approximately 1/2 of the length of separator 170C in the first direction (the X direction).

Depressed portion 174C decreases in occupancy area from first region R1 toward second region R2. The cross sectional area of depressed portion 174C can be observed in a cross section at a position where the plurality of holes 176C are situated side by side in the Z direction orthogonal to the first direction (the X direction).

In the secondary battery according to Embodiment 2 of the present technology, by causing the electrolyte solution that flows out of the electrode assembly from the inside of the electrode assembly at the time of charging to be stored in depressed portion 174C including the plurality of holes 176C, the electrolyte solution stored in the plurality of holes 176C is enabled to return to the central side easily at the time of discharging.

### (Embodiment 3)

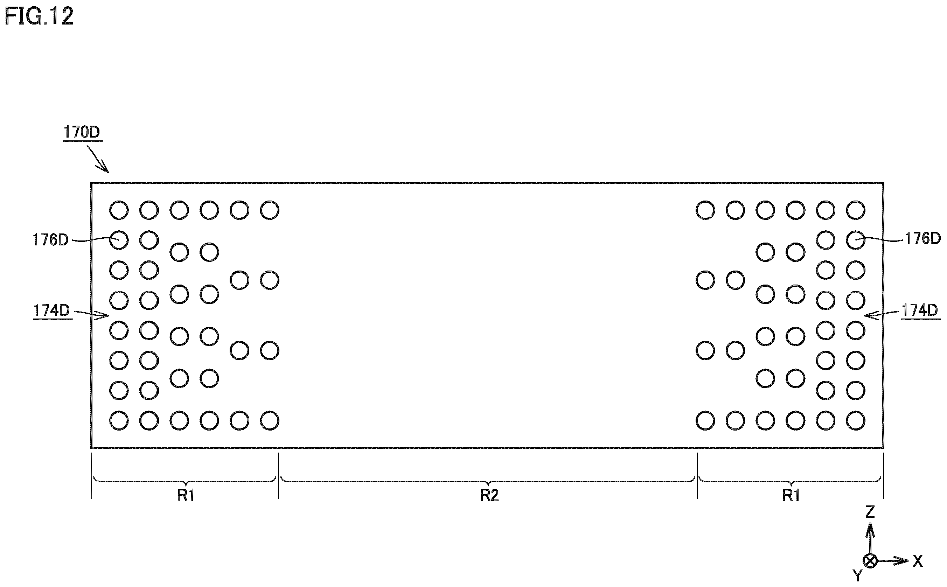

Fig. 12 is a plan view illustrating a configuration of a separator 170D included in an electrode assembly of the secondary battery according to Embodiment 3 of the present technology. As illustrated in Fig. 12, separator 170D according to the present embodiment includes a plurality of holes 176D as a depressed portion 174D. The plurality of holes 176D are situated side by side in the first direction (the X direction) and the Z direction. The plurality of holes 176D each have a round shape in a view in the thickness direction of the electrode assembly (the Y direction).

The plurality of holes 176D according to the present embodiment are situated in first regions R1. First regions R1 and second region R2 each occupy approximately 1/2 of the length of separator 170D in the first direction (the X direction).

Also in the secondary battery according to Embodiment 3 of the present technology, similarly to Embodiment 2, by causing the electrolyte solution that flows out of the electrode assembly from the inside of the electrode assembly at the time of charging to be stored in depressed portion 174D including the plurality of holes 176D, the electrolyte solution stored in the plurality of holes 176D is enabled to return to the central side easily at the time of discharging.

Although the depressed portion is formed by the groove portions or holes in the embodiments described above, the depressed portion is not limited to these configurations but may be formed by combining the groove portions and holes.

Although embodiments of the present invention have been described, it should be understood that the herein-disclosed embodiments are presented by way of illustration and example in every respect and are not to be taken by way of limitation. The scope of the present invention is defined by the claims and intended to include all changes within the purport and scope equivalent to the claims.

## Claims

1. A secondary battery (100) comprising:
an electrode assembly (140) including a positive electrode plate (150), a separator (170), and a negative electrode plate (160) and having a flat shape, the separator (170) being situated between the positive electrode plate (150) and the negative electrode plate (160); and
a case (120) accommodating the electrode assembly (140) and an electrolyte solution, wherein
in a view in a thickness direction of the electrode assembly (140), the separator (170) includes first regions (R1) and a second region (R2), the first regions (R1) including a first end portion (171) and a second end portion (172) opposite to each other in a first direction orthogonal to the thickness direction, the second region (R2) being sandwiched between the first regions (R1) in the first direction and including a central portion (173) of the separator (170),
a depressed portion (174) is provided in a surface of the separator (170), the depressed portion (174) being situated at least in the first region (R1) and allowing the electrolyte solution to flow into the depressed portion (174), and
in a view in the first direction, a cross sectional area (S11) of the depressed portion (174) in the first region (R1) of the separator (170) is larger than a cross sectional area (S12) of the depressed portion (174) in the second region (R2) of the separator (170).

2. The secondary battery (100) according to claim 1, wherein in the view in the thickness direction, an occupancy area (S21) of the depressed portion (174) in the first region (R1) of the separator (170) is larger than an occupancy area (S22) of the depressed portion (174) in the second region (R2) of the separator (170).

3. The secondary battery (100) according to claim 1 or 2, wherein in the view in the thickness direction, the electrode assembly (140) has a rectangular shape including a long side direction and a short side direction, and the first direction is the long side direction of the electrode assembly (140).

4. The secondary battery (100) according to any one of claims 1 to 3, wherein the depressed portion (174) includes a groove portion (175) extending along the first direction from the first end portion (171) to the second end portion (172) of the separator (170).

5. The secondary battery (100) according to claim 4, wherein an average depth of the depressed portion (174) in the first region (R1) of the separator (170) is larger than an average depth of the depressed portion (174) in the second region (R2) of the separator (170).

6. The secondary battery (100) according to any one of claims 1 to 3, wherein the depressed portion (174C) includes a plurality of holes (176C) situated side by side in the first direction.

7. The secondary battery (100) according to any one of claims 1 to 6, wherein the electrode assembly (140) is a wound type electrode assembly in which the positive electrode plate (150), the separator (170), and the negative electrode plate (160) are wound about an axis along the first direction.

## Patentansprüche

1. Sekundärbatterie (100), aufweisend:
eine Elektrodenanordnung (140), welche eine positive Elektrodenplatte (150), einen Separator (170) und eine negative Elektrodenplatte (160) beinhaltet und eine flache Form aufweist, wobei der Separator (170) zwischen der positiven Elektrodenplatte (150) und der negativen Elektrodenplatte (160) angeordnet ist; und
ein Gehäuse (120), in dem die Elektrodenanordnung (140) und eine Elektrolytlösung untergebracht sind, wobei
in einer Ansicht in einer Dickenrichtung der Elektrodenanordnung (140) der Separator (170) erste Bereiche (R1) und einen zweiten Bereich (R2) beinhaltet, wobei die ersten Bereiche (R1) einen ersten Endabschnitt (171) und einen zweiten Endabschnitt (172) beinhalten, die einander in einer ersten Richtung orthogonal zu der Dickenrichtung gegenüberliegen, wobei der zweite Bereich (R2) zwischen den ersten Bereichen (R1) in der ersten Richtung sandwichartig angeordnet ist und einen mittleren Abschnitt (173) des Separators (170) beinhaltet,
ein vertiefter Abschnitt (174) in einer Oberfläche des Separators (170) vorgesehen ist, wobei der vertiefte Abschnitt (174) zumindest in dem ersten Bereich (R1) angeordnet ist und es der Elektrolytlösung ermöglicht, in den vertieften Abschnitt (174) zu fließen, und
in einer Ansicht in der ersten Richtung eine Querschnittsfläche (S11) des vertieften Abschnitts (174) in dem ersten Bereich (R1) des Separators (170) größer ist als eine Querschnittsfläche (S12) des vertieften Abschnitts (174) in dem zweiten Bereich (R2) des Separators (170).

2. Sekundärbatterie (100) nach Anspruch 1, wobei in der Ansicht in Dickenrichtung eine Belegungsfläche (S21) des vertieften Abschnitts (174) in dem ersten Bereich (R1) des Separators (170) größer ist als eine Belegungsfläche (S22) des vertieften Abschnitts (174) in dem zweiten Bereich (R2) des Separators (170).

3. Sekundärbatterie (100) nach Anspruch 1 oder 2, wobei in der Ansicht in der Dickenrichtung die Elektrodenanordnung (140) eine rechteckige Form aufweist, die eine Richtung einer langen Seite und eine Richtung einer kurzen Seite beinhaltet, und die erste Richtung die Richtung der langen Seite der Elektrodenanordnung (140) ist.

4. Sekundärbatterie (100) nach einem der Ansprüche 1 bis 3, wobei der vertiefte Abschnitt (174) einen Nutabschnitt (175) umfasst, der sich entlang der ersten Richtung von dem ersten Endabschnitt (171) zu dem zweiten Endabschnitt (172) des Separators (170) erstreckt.

5. Sekundärbatterie (100) nach Anspruch 4, wobei eine durchschnittliche Tiefe des vertieften Abschnitts (174) in dem ersten Bereich (R1) des Separators (170) größer ist als eine durchschnittliche Tiefe des vertieften Abschnitts (174) in dem zweiten Bereich (R2) des Separators (170).

6. Sekundärbatterie (100) nach einem der Ansprüche 1 bis 3, wobei der vertiefte Abschnitt (174C) eine Vielzahl von Löchern (176C) beinhaltet, die in der ersten Richtung nebeneinander angeordnet sind.

7. Sekundärbatterie (100) nach einem der Ansprüche 1 bis 6, wobei die Elektrodenanordnung (140) eine gewickelte Elektrodenanordnung ist, bei der die positive Elektrodenplatte (150), der Separator (170) und die negative Elektrodenplatte (160) um eine Achse entlang der ersten Richtung gewickelt sind.

## Revendications

1. Une batterie secondaire (100) comprenant :
un ensemble d'électrodes (140) comprenant une plaque d'électrode positive (150), un séparateur (170) et une plaque d'électrode négative (160) et ayant une forme plate, le séparateur (170) étant situé entre la plaque d'électrode positive (150) et la plaque d'électrode négative (160) ; et
un boîtier (120) logeant l'ensemble d'électrodes (140) et une solution électrolytique, dans laquelle
dans une vue dans le sens de l'épaisseur de l'ensemble d'électrodes (140), le séparateur (170) comprend des premières régions (R1) et une deuxième région (R2), les premières régions (R1) comprenant une première partie d'extrémité (171) et une deuxième partie d'extrémité (172) opposées l'une à l'autre dans une première direction orthogonale à la direction de l'épaisseur, la deuxième région (R2) étant prise en sandwich entre les premières régions (R1) dans la première direction et comprenant une partie centrale (173) du séparateur (170),
une partie en creux (174) est prévue dans une surface du séparateur (170), la partie en creux (174) étant située au moins dans la première région (R1) et permettant à la solution électrolytique de s'écouler dans la partie en creux (174), et
dans une vue dans 1a première direction, une section transversale (S11) de la partie en creux (174) dans la première région (R1) du séparateur (170) est plus grande qu'une section transversale (S12) de la partie en creux (174) dans la deuxième région (R2) du séparateur (170).

2. La batterie secondaire (100) selon la revendication 1, dans laquelle, dans la vue dans le sens de l'épaisseur, la surface occupée (S21) par la partie en creux (174) dans la première région (R1) du séparateur (170) est plus grande que la surface occupée (S22) par la partie en creux (174) dans la deuxième région (R2) du séparateur (170).

3. La batterie secondaire (100) selon la revendication 1 ou 2, dans laquelle, dans la vue dans le sens de l'épaisseur, l'ensemble d'électrodes (140) a une forme rectangulaire comprenant un côté long et un côté court, et la première direction est le côté long de l'ensemble d'électrodes (140).

4. La batterie secondaire (100) selon l'une des revendications 1 à 3, dans laquelle la partie en creux (174) comprend une partie rainurée (175) s'étendant dans la première direction depuis la première partie d'extrémité (171) jusqu'à la deuxième partie d'extrémité (172) du séparateur (170).

5. La batterie secondaire (100) selon la revendication 4, dans laquelle la profondeur moyenne de la partie en creux (174) dans la première région (R1) du séparateur (170) est supérieure à la profondeur moyenne de la partie en creux (174) dans la deuxième région (R2) du séparateur (170).

6. La batterie secondaire (100) selon l'une des revendications 1 à 3, dans laquelle la partie en creux (174C) comprend une pluralité de trous (176C) situés côte à côte dans la première direction.

7. La batterie secondaire (100) selon l'une des revendications 1 à 6, dans laquelle l'ensemble d'électrodes (140) est un ensemble d'électrodes de type enroulé dans lequel la plaque d'électrode positive (150), le séparateur (170) et la plaque d'électrode négative (160) sont enroulés autour d'un axe dans la première direction.
